# EUROPÄISCHE PATENTSCHRIFT

(11) **EP 4 392 820 B1**
(45) Veröffentlichungstag und Bekanntmachung des Hinweises auf die Patenterteilung: **14.05.2025**
(21) Anmeldenummer: 22734976.8
(22) Anmeldetag: 23.06.2022
(51) Int. Cl.: G02B 27/01

(54) **REFLEXIONSANZEIGESYSTEM SOWIE VERFAHREN ZUM BETREIBEN EINES REFLEXIONSANZEIGESYSTEMS MIT EINER ABDECKERKENNUNG**
REFLECTION DISPLAY SYSTEM AND METHOD FOR OPERATING A REFLECTION DISPLAY SYSTEM WITH MASKING DETECTION
SYSTÈME D'AFFICHAGE PAR RÉFLEXION ET PROCÉDÉ DE FONCTIONNEMENT D'UN SYSTÈME D'AFFICHAGE PAR RÉFLEXION AVEC DÉTECTION DE MASQUAGE

(30) Priorität: 26.08.2021 DE 102021122157
(43) Veröffentlichungstag der Anmeldung: 03.07.2024
(73) Patentinhaber: Bayerische Motoren Werke Aktiengesellschaft, 80809 München (DE)
(72) Erfinder: RÖLLE, Christopher, 82194 Gröbenzell (DE); RADOJKOVIC, Peter, 81243 München (DE); WAGNER-GENTNER, Armin, 80999 München (DE)
(86) Internationale Anmeldenummer: PCT/EP2022/067243
(87) Internationale Veröffentlichungsnummer: WO 2023/025434

(56) Entgegenhaltungen:
- EP-A1- 3 943 331
- WO-A1-2020/189646
- WO-A1-2021/002055
- US-A1- 2010 264 835
- US-A1- 2013 221 851
- US-A1- 2019 204 592

## Beschreibung

### Technisches Gebiet

Die Erfindung betrifft Frontscheiben-Anzeigesysteme, insbesondere Reflexionsanzeigesysteme, wie beispielsweise PHUD, für Kraftfahrzeuge. Insbesondere betrifft die vorliegende Erfindung Maßnahmen zur Erkennung eines im optischen Strahlenverlauf des Frontscheiben-Anzeigesystems befindlichen Objekts.

### Technischer Hintergrund

Reflexionsanzeigesysteme, wie beispielsweise PHUD, umfassen eine auf der Oberseite der Instrumententafel angeordnete Anzeigeeinheit, deren Anzeige sich auf der Innenseite der Frontscheibe spiegelt, die von einem Fahrzeuginsassen wahrgenommen werden kann. Die Anzeigeeinheit ist dabei etwas vertieft auf der Oberseite der Instrumententafel angeordnet, so dass eine direkte Einsicht auf die Anzeigefläche der Anzeigeeinheit unterbunden wird, um so eine Blendung des Benutzers durch direkt ins Auge einfallendes Licht zu vermeiden.

Durch die Anordnung der Anzeigeeinheit in einer solchen Vertiefung auf der Oberseite der Instrumententafel sind jedoch auch Fremdobjekte, die auf der Anzeigeeinheit aufliegen, nicht ohne Weiteres von der normalen Augenposition der Fahrzeuginsassen sichtbar. Diese Fremdobjekte liegen jedoch im Strahlengang des Anzeigebilds und können so Teile der Anzeige verdecken, so dass eventuell gesetzlich relevante Anzeigesymbole, wie beispielsweise Geschwindigkeitsanzeige, Kammerleuchten, Restreichweite und dergleichen nicht sichtbar sind, aber auch das Fehlen dieser Anzeigesymbole nicht bemerkt wird, da diese nicht dauerhaft angezeigt werden.

Eine Nutzung eines Deckglases, wie es beispielsweise bei klassischen Head-up-Display-Anzeigen verwendet wird, ist bei derartigen Reflexionsanzeigevorrichtungen nachteilig, da dadurch neue Spiegelungen von Umgebungslicht auf die Windschutzscheibe entstehen können, die bei hoher Umgebungshelligkeit die Wahrnehmbarkeit des Reflexionsbildes erheblich beeinträchtigen.

Bisherige Ansätze sehen lediglich vor, Fremdobjekte, die auf der Anzeigeeinheit aufliegen, durch zusätzliche Einrichtungen zu detektieren, wie beispielsweise Kameras oder Lichtschranken oder dergleichen.

Die Druckschrift WO2020/189646 A1 offenbart ein Head-up-Display, das konfiguriert ist, so dass es ein vorbestimmtes Bild in Richtung der Insassen des Fahrzeugs anzeigt, wobei ein Gehäuse eine Öffnung nach oben und eine transparente Abdeckung, die die Öffnung des Gehäuses abdeckt, aufweist. Eine Bilderzeugungseinheit, die Licht zum Erzeugen des vorbestimmten Bildes emittiert, ist innerhalb des durch die transparente Abdeckung gebildeten Aufnahmeabschnitts vorgesehen, und das von der Bilderzeugungseinheit emittierte Licht wird auf die Windschutzscheibe gestrahlt. Das Head-up-Display weist einen Reiniger zum Reinigen der äußeren Oberfläche der transparenten Abdeckung auf.

Die Druckschrift US 2019/204592 A1 offenbart eine Projektionsanzeigevorrichtung mit eine Lichtmodulationseinheit, die in Übereinstimmung mit eingegebenen Bilddaten das von einer Lichtquelle emittierte Licht räumlich moduliert, ein Gehäuse, in dem die Lichtmodulationseinheit untergebracht ist, ein optisches Projektionssystem, das in dem Gehäuse untergebracht ist und das Licht, das räumlich moduliert worden ist, durch einen Öffnungsabschnitt des Gehäuses auf eine Projektionsfläche eines Fahrzeugs projiziert, eine Abdeckung, die den Öffnungsabschnitt verschließt, ein Schutzteil, das beweglich ist und zum Schutz der Abdeckung dient, eine Antriebseinheit, die das Schutzelement antreibt; und eine Objekterfassungseinheit, die ein Objekt erfasst, das sich einer Vorderfläche der Abdeckung nähert. Die Antriebseinheit bewegt das Schutzelement in eine Position oberhalb der Abdeckung und bewirkt, dass das Schutzelement die Abdeckung abdeckt, wenn die Objekterfassungseinheit ein Objekt erfasst. Die Antriebseinheit lässt das Schutzelement aus der Position oberhalb der Abdeckung zurückgezogen, so dass die Abdeckung freiliegt, wenn die Objekterfassungseinheit kein Objekt erfasst.

Die Druckschrift US2010/264835 A1 offenbart ein System, das eine Vielzahl von Lichtelementen; und ein Verwaltungssystem umfasst, das einen Satz von Rechenvorrichtungen enthält. Das Verwaltungssystem ist so konfiguriert, dass es ein Verfahren zum Verwalten der Vielzahl von Lichtelementen implementiert, wobei mindestens eines der mehreren Lichtelemente als ein lichtemittierendes Element und ein Lichterfassungselement abwechselnd betrieben wird, wobei das mindestens eine der mehreren Lichtelemente als ein Lichterfassungselement betrieben wird, während mindestens ein anderes der mehreren Lichtelemente als ein lichtemittierendes Element betrieben wird.

Die Druckschrift WO 2021/002055 A1 offenbart eine Vorrichtung zur Anzeige eines virtuellen Bildes, die ein Anzeigelicht eines Bildes in Richtung einer Projektionseinheit projiziert, um das Bild visuell als ein virtuelles Bild anzuzeigen. Eine Anzeige, die Licht emittiert, und ein beugungsreflektierendes Element sind vorgesehen, das das von der Anzeige emittierte Anzeigelicht durch Beugung reflektiert und das in einer Plattenform in einer Haltung entlang der horizontalen Ebene des Fahrzeugs ausgebildet ist. Die Vorrichtung umfasst auch ein horizontal angeordnetes beugungsreflektierendes Element, das das einfallende Anzeigelicht in Richtung des darüber angeordneten Projektionsabschnitts emittiert, und den Einfallswinkel des angezeigten Lichts auf das horizontal angeordnete beugungsreflektierende Element.

Die Druckschrift US 2013/221851 A1 offenbart ein Verfahren zur Lichterfassung, wobei eine lichtemittierende Diode in Sperrrichtung vorgespannt wird, und des von der lichtemittierenden Diode in Reaktion auf die Umgebungsbeleuchtung erzeugten Photostroms erfasst wird.

Es ist Aufgabe der vorliegenden Erfindung, ein verbessertes Verfahren zur Detektion von Verdeckungen eines Anzeigebildes bei einem Reflexionsanzeigesystem zur Verfügung zu stellen.

### Offenbarung der Erfindung

Diese Aufgabe wird durch ein Verfahren zum Betreiben eines Reflexionsanzeigesystem gemäß Anspruch 1 sowie durch ein Reflexionsanzeigesystem gemäß den nebengeordneten Ansprüchen gelöst.

Weitere Ausgestaltungen sind in den abhängigen Ansprüchen angegeben.

Gemäß einem ersten Aspekt ist ein Verfahren zum Betreiben eines Reflexionsanzeigesystems zur Anzeige eines Anzeigebilds für einen Fahrzeuginsassen eines Kraftfahrzeugs durch Reflexion des Anzeigebilds an einer Reflexionsfläche, insbesondere an einer Frontscheibe, vorgesehen, wobei eine Anzeigeeinheit, die mit einem Mikro-LED-Display ausgebildet ist, um das Anzeigebild über eine Anzeigefläche der Anzeigeeinheit auszugeben, wobei die Anzeigeeinheit so an einer Oberseite einer Instrumententafel angeordnet ist, so dass eine Reflexion des Anzeigebilds über die Frontscheibe in einem Augenbereich eines Fahrzeuginsassen wahrnehmbar ist; mit den folgenden Schritten:
- Betreiben zumindest eines Teils der LED-Dioden des Mikro-LED-Display sensorisch, um jeweils eine Lichtstärke von einfallendem Umgebungslicht zu detektieren;
- Erkennen eines Vorhandenseins eines Fremdobjekts auf der Anzeigefläche abhängig von den gemessenen Lichtstärken in den sensorisch betriebenen LED-Dioden; und
- Signalisieren einer Störung der Anzeige des Anzeigebilds bei Erkennen des Fremdobjekts auf der Anzeigefläche.

Fremdobjekte, die auf der Instrumententafel abgelegt werden, können Komponenten zur Darstellung von Informationen über die Frontscheibe ganz oder teilweise verdecken. Wird das Reflexionsanzeigesystem zur Darstellung von sicherheitsrelevanten Informationen genutzt, ist es jedoch notwendig, eine Nichtanzeige einer Information von einer Blockierung der Anzeige der Information durch ein aufliegendes Fremdobjekt unterscheiden zu können.

Fremdobjekte im Sinne dieser Erfindung können beliebige Gegenstände sein, die die Wahrnehmung eines Anzeigebilds behindern, wie z.B. Kleidungsstücke, Papiere und dergleichen.

Insbesondere, wenn die Anzeigeeinheit in einer Vertiefung auf der Oberseite der Instrumententafel angeordnet ist, sind jedoch Fremdobjekte, die auf der Anzeigeeinheit aufliegen, nicht ohne Weiteres von der normalen Augenposition der Fahrzeuginsassen sichtbar. Diese Fremdobjekte liegen jedoch im Strahlengang des Anzeigebilds und können so Teile der Anzeige verdecken, so dass eventuell sicherheitsrelevante und gesetzlich vorgeschriebene Anzeigesymbole, wie beispielsweise Geschwindigkeitsanzeige, Kammerleuchten, Restreichweite und dergleichen nicht sichtbar sind. Jedoch kann nicht ohne Weiteres das Fehlen dieser Anzeigesymbole bemerkt werden, da diese nicht dauerhaft angezeigt werden.

Mithilfe des obigen Reflexionsanzeigesystems ist es möglich, zu erkennen, ob die Anzeigefläche der Anzeigeeinheit frei von aufliegenden Fremdobjekten ist. Dadurch kann detektiert werden, ob der Strahlengang des Reflexionsanzeigesystems durch ein Fremdobjekt auf der Anzeigefläche gestört ist. Eine Erkennung einer solchen Unterbrechung der Anzeige des Reflexionsanzeigesystems ist wesentlich, um eine Warnung oder sonstige Gegenmaßnahmen signalisieren zu können. Das obige Reflexionsanzeigesystem ermöglicht somit eine automatisierte Erkennung eines das Anzeigebild störenden Fremdobjekts auf der Anzeigefläche der Anzeigeeinheit.

Weiterhin kann die Anzeigeeinheit so in der Vertiefung angeordnet sein, dass das Anzeigebild, das auf der Anzeigefläche der Anzeigeeinheit dargestellt wird, nicht direkt in dem Augenbereich wahrnehmbar ist.

Ein Mikro-LED-Display weist eine Matrix aus LEDs auf, die als Dioden ausgebildet sind. Die LED können bei aktiver Bestromung Licht abgeben. Die Mikro-LED-Matrix weist LEDs für das Aussenden von Licht verschiedener Wellenlängenbereiche auf. Die LEDs in der Matrix können individuell angesteuert werden, um so entsprechend Abbildungen über die Anzeigefläche auszugeben.

Die Ausbildung der Mikro-LED-Display ermöglicht es zudem, die LEDs sensorisch zu betreiben, so dass diese als Photodioden arbeiten. Diese Photodioden sind für die entsprechend ausgelegte Wellenlänge lichtempfindlich und liefern einen Diodenstrom als Helligkeitssignal, der von der Stärke des einfallenden Lichts abhängt. Liegt nun ein Fremdobjekt auf der Anzeigefläche auf, so schirmt dieses Umgebungslicht ab, so dass ein Bereich sehr geringer Lichtstärke auf dem Mikro-LED-Display erkannt werden kann. Der Bereich sehr geringer Lichtstärke kann als ein aufliegendes Fremdobjekt interpretiert werden.

Es kann vorgesehen sein, dass in einem Bereich oberhalb der Anzeigeeinheit eine Lichtquelle angeordnet ist, die es ermöglicht, für die Messung eines Vorhandenseins eines aufliegenden Fremdobjekts mithilfe des Mikro-LED-Displays benötigtes Umgebungslicht zu erhöhen.

Die Erfassung eines aufliegenden Fremdobjekts kann kontinuierlich erfolgen. Da eine Anzeige eines Anzeigebilds und eine Erfassung nicht gleichzeitig möglich sind, ist es vorteilhaft, dass das Auslesen des Lichteinfalls auf die LED-Dioden periodisch erfolgt während eines Zeitraums, der hinreichend kurz ist, wie z.B. zwischen 30 und 50ms, so dass dieser nicht als Unterbrechung einer Abbildung über das Reflexionsanzeigesystem wahrgenommen werden kann.

In einer weiteren Ausführungsform kann ein Teil der LEDs aktiv zum Aussenden von Licht betrieben werden und benachbarte LEDs sensorisch zum Detektieren eines Lichteinfalls betrieben werden. Die sensorisch betriebenen LEDs sind dabei flächig über die Anzeigefläche der Mikro-LED-Displays zwischen den aktiv betriebenen LEDs verteilt angeordnet. Dadurch ist es möglich, dass Licht zum Detektieren des Fremdobjekts von der Mikro-LED-Matrix selbst bereitgestellt wird. Im Effekt geben dann die aktiv betriebenen LEDs der Mikro-LED-Matrix Licht ab, das an dem Fremdobjekt reflektiert wird und zu einem charakteristischen Muster des reflektierten Lichts führt, das erkannt werden kann. So können beispielsweise die aktiv betriebenen LEDs und die sensorisch als Detektoren betriebenen LEDs in der Matrix benachbart zueinander, insbesondere wechselweise benachbart zueinander, angeordnet sein. Werden nun die aktiven LEDs mit einem Pulsmuster gepulst angesteuert, so wird dieses gepulste Licht an einem etwaig aufliegenden Fremdobjekt reflektiert und auf die darunterliegenden sensorisch betriebenen LEDs zurückgeworfen. Diese detektieren einfallendes Licht und erkennen an dem Vorhandensein von Licht, das mit dem bestimmten Pulsmuster gepulst ist, dass das Fremdobjekt vorhanden ist. LEDs, die nicht durch ein Fremdobjekt überdeckt sind, erfassen somit nicht das gepulste Licht der aktiven LEDs und können somit feststellen, dass kein Fremdobjekt auf der Anzeigefläche vorhanden ist.

Gemäß einem weiteren Aspekt ist ein Reflexionsanzeigesystem zur Anzeige eines Anzeigebilds für einen Fahrzeuginsassen eines Kraftfahrzeugs durch Reflexion des Anzeigebilds an einer Reflexionsfläche, insbesondere an einer Frontscheibe, vorgesehen, umfassend:
- eine Anzeigeeinheit, die mit einem Mikro-LED-Display ausgebildet ist, um das Anzeigebild über eine Anzeigefläche der Anzeigeeinheit auszugeben, wobei die Anzeigeeinheit so an einer Oberseite einer Instrumententafel angeordnet ist, so dass eine Reflexion des Anzeigebilds über die Frontscheibe in einem Augenbereich eines Fahrzeuginsassen wahrnehmbar ist;
- eine Steuereinheit, die ausgebildet ist,
   ∘ um zumindest einen Teil der LED-Dioden des Mikro-LED-Display sensorisch zu betreiben, um eine Lichtstärke von einfallendem Umgebungslicht zu detektieren;
   ∘ um abhängig von den gemessenen Lichtstärken in den sensorisch betriebenen LED-Dioden ein Vorhandensein eines Fremdobjekts auf der Anzeigefläche zu erkennen; und
   ∘ um bei Erkennen des Fremdobjekts auf der Anzeigefläche eine Störung der Anzeige des Anzeigebilds zu signalisieren.

Gemäß einem weiteren Aspekt ist ein Kraftfahrzeug vorgesehen, umfassend:
- eine Instrumententafel zwischen einer Frontscheibe des Kraftfahrzeugs und einer Lenksäule;
- das obige Reflexionsanzeigesystem.

### Kurzbeschreibung der Zeichnung

Ausführungsformen werden nachfolgend anhand der beigefügten Zeichnungen näher erläutert. Es zeigen:
- Figur 1: eine schematische Querschnittsdarstellung eines Reflexionsanzeigesystems in einem Kraftfahrzeug;
- Figur 2: eine Draufsicht auf eine beispielhaftes Mikro-LED-Display; und
- Figur 3: ein Flussdiagramm zur Veranschaulichung eines Verfahrens zum Signalisieren eines Vorhandenseins eines Fremdobjekt auf der Anzeigefläche der Anzeigeeinheit.

### Beschreibung von Ausführungsformen

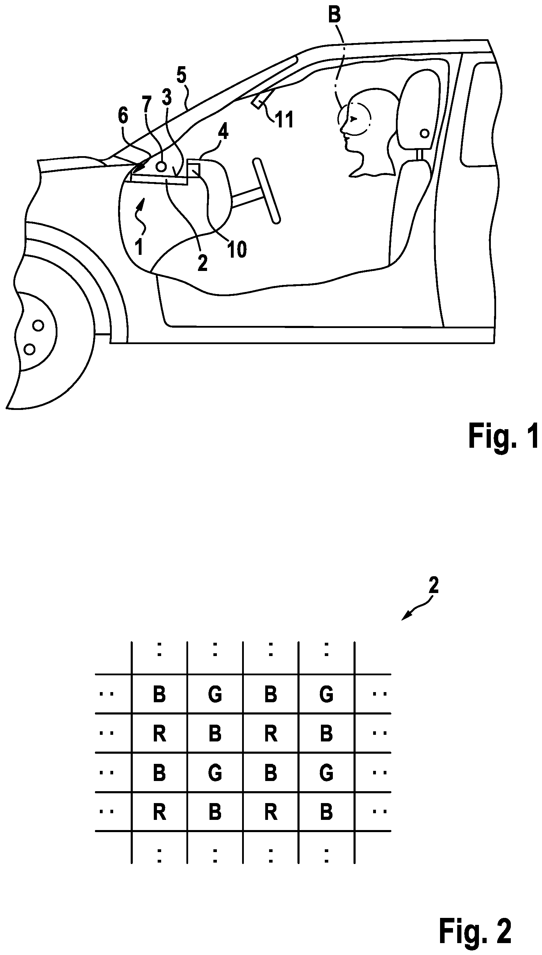

Figur 1 zeigt eine schematische Querschnittsdarstellung durch ein Kraftfahrzeug mit einem Reflexionsanzeigesystem 1. Das Reflexionsanzeigesystem ist an einer Oberseite einer Instrumententafel 4 angeordnet und weist eine Anzeigeeinheit 2 auf, die eine Anzeigefläche 3 zur Darstellung eines Anzeigebilds umfasst. Die Anzeigeeinheit 2 ist auf der Oberseite der Instrumententafel 4 unterhalb einer Frontscheibe 5 angeordnet.

Die Anzeigefläche 3 ist bezüglich der Frontscheibe 5 so ausgerichtet, dass ein auf der Anzeigefläche der Anzeigeeinheit 2 angezeigtes Anzeigebild an einem unteren Bereich der Innenseite der Frontscheibe 5 reflektiert wird und durch einen Fahrzeuginsassen in einem Augenbereich B wahrgenommen werden kann. Dadurch kann die Ausrichtung der Anzeigeeinheit 2 bzw. dessen Anzeigefläche vorzugsweise im Wesentlichen parallel zur Fahrzeuglängs- und Querachse sein oder von diesen um einen Winkel von nicht mehr als 0-20° abweichen.

Die Anzeigeeinheit 2 kann in einer Vertiefung 6 der Instrumententafel angebracht sein, so dass vom Fahrzeuginsassen kein direkter Blick auf die Anzeigefläche 3 der Anzeigeeinheit 2 möglich ist und ein Blenden der Fahrzeuginsassen durch direktes Licht von der Anzeigefläche 3 in den Augenbereich B vermieden wird. Weiterhin ist die Anzeigefläche 3 der Anzeigeeinheit 2 so ausgerichtet, dass ein angezeigtes Anzeigebild an der Innenseite der Frontscheibe 5 reflektiert wird und von einem Fahrzeuginsassen in einem Augenbereich B als Reflexionsbild auf der Frontscheibe 5 wahrgenommen werden kann.

Die Anzeigeeinheit 2 ist vorzugsweise als Mikro-LED-Anzeigeeinheit ausgebildet, um ein leuchtstarkes Anzeigebild bereitzustellen, so dass die erzeugte Reflexion auch bei hoher Umgebungshelligkeit über den entsprechenden Bereich der Frontscheibe 5 wahrgenommen werden kann.

Da die Anzeigeeinheit 2 in der Vertiefung 6 an der Oberseite der Instrumententafel 4 angeordnet ist, kann auch ein Fremdobjekt 7 in diese Vertiefung 6 gelangen und damit auf der Anzeigefläche 3 der Anzeigeeinheit 2 zu liegen kommen. Ein auf der Anzeigeeinheit 2 angezeigtes Anzeigebild kann dann nicht oder nur teilweise als Reflexionsbild durch einen Fahrzeuginsassen wahrgenommen werden.

Die Anzeigeeinheit 2 ist als Mikro-LED-Anzeigeeinheit ausgebildet, um ein leuchtstarkes Anzeigebild bereitzustellen, so dass die erzeugte Reflexion auch bei hoher Umgebungshelligkeit über den entsprechenden Bereich der Frontscheibe 5 wahrgenommen werden kann. Figur 2 zeigt den Aufbau einer Mikro-LED-Matrix, wobei jeweils Gruppen von vier Pixeln mit verschiedenen Farben rot R, grün G, blau B vorgesehen sind

Zur Erkennung, ob das Fremdobjekt 7 auf der Anzeigefläche 3 aufliegt oder nicht, kann eine Steuereinheit 10 ausgebildet sein, neben der Anzeige des Anzeigebilds über die Anzeigeeinheit 2 diese auch zur sensorischen Erfassung des Aufliegens eines Fremdobjekts 7 auf der Anzeigefläche 3 zu nutzen. Dazu ist die Steuereinheit 10 ausgebildet, in regelmäßigen Zeitabständen jeweils für eine kurze Zeitdauer die LEDs des Mikro-LED-Displays bzw. einen Teil der LEDs des Mikro-LED-Displays als Photodioden zu betreiben. Durch die Möglichkeit der selektiven Ansteuerung des Mikro-LED-Displays im aktiven Betrieb besteht auch die Möglichkeit, die LEDs des Mikro-LED-Displays selektiv in einem sensorischen Betrieb als Photodiode zu betreiben. Die sensorisch betriebenen LEDs liefern dann ein Helligkeitssignal, das die Helligkeit des durch diese empfangenen Lichts angibt.

Die kurze Zeitdauer entspricht einer Zeitdauer, für die die aktive Anzeige unterbrochen wird, und damit diese Zeitdauer nicht wahrnehmbar ist, sollte diese weniger als 50 ms betragen.

Während des kurzen Zeitraums kann nun durch Auswerten einer durch die sensorisch betriebenen LEDs erfassten elektrischen Größe als Helligkeitssignal das Vorhandensein eines Fremdobjekts 7 auf der Anzeigefläche 3 festgestellt werden. Die elektrische Größe repräsentiert die Lichtstärke des auf die entsprechende Photodiode einfallenden Umgebungslichts. Die Auswertung, ob ein Fremdobjekt 7 auf der Anzeigefläche 3 aufliegt, wird vorzugsweise durch Nutzung aller LEDs des Mikro-LED-Displays als Photodioden durchgeführt. Alternativ kann auch nur ein Teil der LEDs, der insbesondere flächig die gesamte Anzeigefläche überdeckt, zur Erfassung eines aufliegenden Fremdobjekts 7 genutzt werden. Die übrigen LEDs können weiterhin aktiv betrieben werden.

Insbesondere kann erkannt werden, ob ein Bereich auf der Anzeigefläche 3 vorliegt, an dem kein Lichteinfall dediziert wird. Insbesondere wenn gleichzeitig von weiteren sensorisch betriebenen LEDs festgestellt wird, dass die Umgebungshelligkeit ausreichend groß ist, um einen entsprechenden Lichteinfall auf den betreffenden Photodioden festzustellen, kann entsprechend auf ein aufliegendes Fremdobjekt 7 geschlossen werden. So kann ein aufliegendes Fremdobjekt 7 erkannt werden, wenn die detektierten Lichtstärken von insbesondere gleichzeitig sensorisch betriebenen LEDs sich um mehr als einen vorgegebenen Differenzbetrag unterscheiden.

Alternativ kann eine externe Lichtquelle 11 vorgesehen sein, die dauerhaft oder nur für die Zeitdauer, während der die LEDs oder der entsprechende Teil der LEDs sensorisch betrieben werden, Licht auf die Anzeigefläche 3 richtet. Insbesondere ist es vorteilhaft, für die Erkennung eines aufliegenden Fremdobjekts 7 die Mikro-LED-Display mit LEDs mit Infrarotlichtempfindlichkeit zu verwenden und die externe Lichtquelle 11 als Infrarotlichtquelle auszubilden. Dies vermeidet Störungen des Fahrers durch die externe Lichtquelle 11 im Fahrzeuginnenraum.

In einer alternativen Ausführungsform kann zusätzliches Licht auch durch die aktiv betriebenen LEDs selbst bereitgestellt werden. Insbesondere können die LEDs während einer Auflageerkennung wechselweise angeordnet sein und aktiv und sensorisch betrieben werden, so dass eine zu einer sensorisch betriebenen LED benachbarte LED aktiv betrieben wird. Die durch die sensorisch betriebene LED erfasste Lichtstärke kann nun abhängig davon variieren, ob Licht einer benachbart betriebenen aktiven LED an einem unmittelbar auf der Anzeigefläche 3 aufliegenden Fremdobjekt 7 reflektiert wird oder ob das ausgesandte Licht unreflektiert den Bereich des Mikro-LED-Displays verlässt.

Um aufliegende Fremdobjekte 7 besser von Bereichen, in denen kein Fremdobjekt 7 aufliegt, zu unterscheiden, kann das von den aktiv betriebenen LEDs ausgesandte Licht gepulst werden, insbesondere mit einem bestimmten Pulsmuster, das durch die übrigen sensorisch betriebenen LEDs detektiert wird. Wird dieses Pulsmuster durch die sensorisch betriebenen Mikro-LEDs empfangen, so kann die Lichtstärke des empfangenen Helligkeitssignals gemäß einem Schwellwertvergleich überprüft werden, um direkte Einkopplungen des ausgesandten Pulsmusters in die sensorisch betriebenen LEDs auszufiltern. Liegt die Lichtstärke des Pulsmusters, die durch die sensorisch betriebenen LEDs empfangen wird, über einem vorgegebenen Schwellenwert, so kann ein Fremdobjekt erkannt werden. Auf diese Weise kann das Reflexionsanzeigesystem, und insbesondere das Verfahren zum Erkennen eines aufliegenden Fremdobjekts, störunanfällig ausgebildet werden.

In weiteren Ausführungsformen kann auch ohne Anwenden eines Pulsmusters eine Verdeckung der Anzeigefläche erkannt werden, indem die sensorisch erfasste Lichtstärke (Helligkeitssignal) mit einem Schwellenwertvergleich überprüft wird. Dabei kann der vorgegebene Schwellenwert von der Helligkeit des Umgebungslichts abhängig sein. Bei geringer Umgebungshelligkeit, die zu einem Helligkeitssignal der sensorisch betriebenen LEDs führt, das geringer/schwächer ist als das Helligkeitssignal bei einem aufliegendem Fremdobjekt 7, kann ein Verdeckungsereignis erkannt werden, wenn die Lichtstärke über einem vorgegebenen Schwellenwert liegt. Der vorgegebene Schwellenwert des Helligkeitssignals wird dann so festgelegt, dass dieser ein Helligkeitssignal repräsentiert, das einem Helligkeitssignal entspricht, wie es ein schlecht oder gewöhnlich reflektierendes aufliegendes Fremdobjekt 7 hervorruft.

Bei hoher Umgebungshelligkeit, die zu einem Helligkeitssignal der sensorisch betriebenen LEDs führt, das höher/stärker ist als das Helligkeitssignal bei einem aufliegendem Fremdobjekt 7, kann ein Verdeckungsereignis erkannt werden, wenn die Lichtstärke bzw. das detektierte Helligkeitssignal unter einem vorgegebenen Schwellenwert liegt. Der vorgegebene Schwellenwert des Helligkeitssignals wird dann so festgelegt, dass dieser ein Helligkeitssignal repräsentiert, das einem Helligkeitssignal entspricht, wie es ein gut oder gewöhnlich reflektierendes aufliegendes Fremdobjekt 7 hervorruft. Somit ergeben sich zwei Schwellenwerte, die abhängig von der Umgebungshelligkeit gewählt werden können.

Wird das Reflexionsanzeigesystem 1 ohne externe Lichtquelle ausgebildet, so können die Auswertungen über mehrere aufeinanderfolgende Detektionszyklen kombiniert werden, um kurzzeitige Schattenwürfe, wie beispielsweise durch Häuser, Bäume und andere Bauteile, während einer Fahrt auszublenden. Erst wenn mehrere zeitlich nacheinander liegende Ereignisse detektiert werden, bei denen sich die detektierte Lichtstärke über einem vorgegebenen Schwellenwert befindet, so kann ein Fremdobjekt erkannt werden.

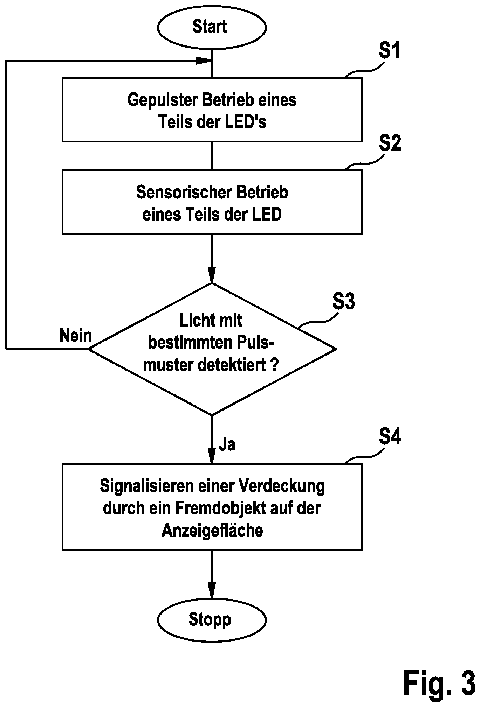

Figur 3 zeigt ein Flussdiagramm zur Veranschaulichung eines Verfahrens zum Erkennen eines Fremdobjekts 7, das in der Steuereinheit 10 ausgeführt werden kann.

In Schritt S1 wird ein Teil der LEDs der Anzeigeeinheit 2 mit einem Pulsmuster gepulst betrieben.

In Schritt S2 wird ein Teil der LEDs der Anzeigeeinheit 2 sensorisch betrieben.

In Schritt S3 wird überprüft, ob eine die sensorisch betriebenen LEDs Licht bzw. ein Helligkeitssignal mit dem bestimmten Pulsmuster empfangen. Ist dies der Fall (Alternative: ja), so wird das Verfahren mit Schritt S4 fortgesetzt, andernfalls (Alternative: Nein) wird zu Schritt S1 zurückgesprungen.

Wird in Schritt S3 erkannt, dass ein Fremdobjekt 7 auf der Anzeigefläche 3 vorhanden ist, so wird in Schritt S4 das Vorliegen eines Fremdobjekts 7 auf der Anzeigefläche 3 signalisiert. Das Signalisieren kann mithilfe eines optischen oder akustischen Signals oder in sonstiger Weise erfolgen, die die Fahrzeuginsassen darauf aufmerksam macht, dass die Anzeige zumindest teilweise verdeckt ist.

### Bezugszeichenliste

- 1: Reflexionsanzeigesystem
- 2: Anzeigeeinheit
- 3: Anzeigefläche
- 4: Instrumententafel
- 5: Frontscheibe
- 6: Vertiefung
- 7: Fremdobjekt
- 10: Steuereinheit
- 11: externe Lichtquelle

## Patentansprüche

1. Verfahren zum Betreiben eines Reflexionsanzeigesystems (1) zur Anzeige eines Anzeigebilds für einen Fahrzeuginsassen eines Kraftfahrzeugs durch Reflexion des Anzeigebilds an einer Reflexionsfläche, insbesondere an einer Frontscheibe (5), wobei eine Anzeigeeinheit (2), die mit einem Mikro-LED-Display ausgebildet ist, um das Anzeigebild über eine Anzeigefläche (3) der Anzeigeeinheit (2) auszugeben, wobei die Anzeigeeinheit (2) so an einer Oberseite einer Instrumententafel (4) angeordnet ist, so dass eine Reflexion des Anzeigebilds über die Frontscheibe (5) in einem Augenbereich (B) eines Fahrzeuginsassen wahrnehmbar ist; mit den folgenden Schritten:
- Betreiben (S1) zumindest eines Teils der LED-Dioden des Mikro-LED-Display sensorisch, um jeweils eine Lichtstärke von einfallendem Licht, insbesondere einfallendem Umgebungslicht, zu detektieren;
- Erkennen (S2, S3) eines Vorhandenseins eines Fremdobjekts (7) auf der Anzeigefläche (3) abhängig von den gemessenen Lichtstärken in den sensorisch betriebenen LED-Dioden; und
- Signalisieren (S4) einer Störung der Anzeige des Anzeigebilds bei Erkennen des Fremdobjekts (7) auf der Anzeigefläche (3).

2. Verfahren nach Anspruch 1, wobei der zumindest eine Teil der LED-Dioden des Mikro-LED-Display alternierend aktiv und sensorisch betrieben wird, wobei insbesondere der zumindest eine Teil der LED-Dioden für eine Zeitdauer sensorisch betrieben wird, die für einen Nutzer nicht wahrnehmbar ist.

3. Verfahren nach Anspruch 1 oder 2, wobei zumindest zeitweise ein Teil der LEDs des Mikro-LED-Displays aktiv zum Aussenden von Licht betrieben werden und gleichzeitigt benachbarte LEDs sensorisch zum Detektieren eines Lichteinfalls betrieben werden, wobei die sensorisch betriebenen LEDs flächig über die Anzeigefläche (3) der Mikro-LED-Displays zwischen den aktiv betriebenen LEDs verteilt angeordnet sind, so dass Licht, das von den aktiv betriebenen LEDs der Mikro-LED-Matrix bereitgestellt wird, an einem aufliegenden Fremdobjekt (7) reflektiert ist und durch die sensorisch betriebenen LEDs detektierbar ist.

4. Verfahren nach Anspruch 3, wobei die aktiven LEDs mit einem bestimmten Pulsmuster gepulst angesteuert werden, wobei Licht, das durch die sensorisch betriebenen LEDs erfasst wird, ausgewertet wird, indem bei Erkennen von Licht, das mit dem bestimmten Pulsmuster gepulst ist, das Vorhandensein eines Fremdobjekts (7) erkannt wird.

5. Verfahren nach Anspruch 3, wobei ein aufliegendes Fremdobjekt (7) abhängig von einem Schwellenwertvergleich erkannt wird, wobei ein Schwellenwert abhängig von der Umgebungshelligkeit bestimmt wird.

6. Reflexionsanzeigesystem (1) zur Anzeige eines Anzeigebilds für einen Fahrzeuginsassen eines Kraftfahrzeugs durch Reflexion des Anzeigebilds an einer Reflexionsfläche, insbesondere an einer Frontscheibe (5), umfassend:
- eine Anzeigeeinheit (2), die mit einem Mikro-LED-Display ausgebildet ist, um das Anzeigebild über eine Anzeigefläche (3) der Anzeigeeinheit (2) auszugeben, wobei die Anzeigeeinheit (2) so an einer Oberseite einer Instrumententafel (4) angeordnet ist, so dass eine Reflexion des Anzeigebilds über die Frontscheibe (5) in einem Augenbereich (B) eines Fahrzeuginsassen wahrnehmbar ist;
- eine Steuereinheit (10), die ausgebildet ist,
∘ um zumindest einen Teil der LED-Dioden des Mikro-LED-Display sensorisch zu betreiben, um eine Lichtstärke von einfallendem Licht, insbesondere einfallendem Umgebungslicht, zu detektieren;
∘ um abhängig von den gemessenen Lichtstärken in den sensorisch betriebenen LED-Dioden ein Vorhandensein eines Fremdobjekts (7) auf der Anzeigefläche (3) zu erkennen; und
∘ um bei Erkennen des Fremdobjekts (7) auf der Anzeigefläche (3) eine Störung der Anzeige des Anzeigebilds zu signalisieren.

7. Reflexionsanzeigesystem (1) nach Anspruch 6, wobei die Anzeigeeinheit (2) so in der Vertiefung angeordnet ist, dass das Anzeigebild, das auf der Anzeigefläche (3) der Anzeigeeinheit (2) dargestellt wird, nicht direkt in dem Augenbereich (B) wahrnehmbar ist.

8. Reflexionsanzeigesystem (1) nach Anspruch 6 oder 7, wobei das Mikro-LED-Display eine Matrix aus LEDs aufweist.

9. Reflexionsanzeigesystem (1) nach einem der Ansprüche 6 bis 8, wobei eine externe Lichtquelle (11) vorgesehen ist, die die Lichtstärke des Umgebungslichts erhöht.

10. Reflexionsanzeigesystem (1) nach Anspruch 9, wobei die externe Lichtquelle (11) zum Aussenden von Infrarot-Licht ausgebildet ist, wobei zumindest die sensorisch betriebenen LEDs des Mikro-LED-Display ausgebildet sind, einfallendes Infrarotlicht zu detektieren.

11. Kraftfahrzeug, umfassend:
- eine Instrumententafel (4) zwischen einer Frontscheibe (5) des Kraftfahrzeugs und einer Lenksäule;
- das Reflexionsanzeigesystem (1) nach einem der Ansprüche 6 bis 10.

## Claims

1. Method for operating a reflection display system (1) for displaying a display image for a vehicle occupant of a motor vehicle by way of reflection of the display image at a reflection surface, in particular at a windshield (5), wherein a display unit (2) is configured with a micro-LED display in order to output the display image via a display surface (3) of the display unit (2), wherein the display unit (2) is arranged on an upper side of an instrument panel (4) such that a reflection of the display image is perceivable via the windshield (5) in an eye region (B) of a vehicle occupant, having the following steps:
- operating (S1) at least one part of the LED diodes of the micro-LED display for sensing to detect a respective light intensity of incident light, in particular incident ambient light;
- detecting (S2, S3) the presence of a foreign object (7) on the display surface (3) depending on the measured light intensities in the LED diodes which are operated for sensing; and
- signalling (S4) a disruption of the display of the display image during the detection of the foreign object (7) on the display surface (3).

2. Method according to Claim 1, wherein the at least one part of the LED diodes of the micro-LED display is operated actively and for sensing in alternation, wherein in particular the at least one part of the LED diodes is operated for sensing for a time period which is not perceivable by a user.

3. Method according to Claim 1 or 2, wherein a part of the LEDs of the micro-LED display is at least temporarily operated actively to emit light and, at the same time, neighbouring LEDs are operated for sensing to detect the incidence of light, wherein the LEDs which are operated for sensing are distributed over the area of the display surface (3) of the micro-LED display between the actively operated LEDs, so that light that is provided by the actively operated LEDs of the micro-LED matrix is reflected at a foreign object (7) located on top and is detectable by the LEDs operated for sensing.

4. Method according to Claim 3, wherein the active LEDs are controlled in a pulsed manner with a specific pulse pattern, wherein light which is detected by the LEDs which are operated for sensing is evaluated by virtue of the fact that, when light that is pulsed with the specific pulse pattern is recognized, the presence of a foreign object (7) is detected.

5. Method according to Claim 3, wherein a foreign object (7) located on top is detected in dependence on a threshold value comparison, wherein a threshold value is determined depending on the ambient brightness.

6. Reflection display system (1) for displaying a display image for a vehicle occupant of a motor vehicle by way of reflection of the display image at a reflection surface, in particular at a windshield (5), comprising:
- a display unit (2), which is configured with a micro-LED display in order to output the display image via a display surface (3) of the display unit (2), wherein the display unit (2) is arranged on an upper side of an instrument panel (4) such that a reflection of the display image is perceivable via the windshield (5) in an eye region (B) of a vehicle occupant,
- a control unit (10), which is configured
∘ to operate at least one part of the LED diodes of the micro-LED display for sensing to detect a light intensity of incident light, in particular incident ambient light;
∘ to detect the presence of a foreign object (7) on the display surface (3) depending on the measured light intensities in the LED diodes which are operated for sensing; and
∘ to signal a disruption of the display of the display image during the detection of the foreign object (7) on the display surface (3).

7. Reflection display system (1) according to Claim 6, wherein the display unit (2) is arranged in the recess such that the display image which is represented on the display surface (3) of the display unit (2) is not directly perceivable in the eye region (B).

8. Reflection display system (1) according to Claim 6 or 7, wherein the micro-LED display has a matrix of LEDs.

9. Reflection display system (1) according to any of Claims 6 to 8, wherein an external light source (11) which increases the light intensity of the ambient light is provided.

10. Reflection display system (1) according to Claim 9, wherein the external light source (11) is configured for emitting infrared light, wherein at least the LEDs of the micro-LED display which are operated for sensing are configured to detect incident infrared light.

11. Motor vehicle comprising:
- an instrument panel (4) between a windshield (5) of the motor vehicle and a steering column;
- the reflection display system (1) according to any of Claims 6 to 10.

## Revendications

1. Procédé pour faire fonctionner un système d'affichage par réflexion (1) pour afficher une image d'affichage pour un occupant d'un véhicule automobile par réflexion de l'image d'affichage sur une surface de réflexion, en particulier sur un pare-brise (5), une unité d'affichage (2) étant conçue avec un dispositif d'affichage à micro-DEL afin de délivrer l'image d'affichage par l'intermédiaire d'une surface d'affichage (3) de l'unité d'affichage (2), l'unité d'affichage (2) étant agencée sur un côté supérieur d'un panneau d'instruments (4) de telle sorte qu'une réflexion de l'image d'affichage par l'intermédiaire du pare-brise (5) soit perceptible dans la zone de l'œil (B) d'un occupant du véhicule ; comprenant les étapes suivantes consistant à :
- faire fonctionner (S1) au moins une partie des diodes DEL du dispositif d'affichage à micro-DEL en mode capteur pour détecter respectivement une intensité lumineuse de lumière incidente, en particulier de lumière ambiante incidente ;
- reconnaître(S2, S3) qu'un objet étranger (7) est présent sur la surface d'affichage (3) en fonction des intensités lumineuses mesurées dans les diodes DEL actionnées en mode capteur ; et
- signaler (S4) une perturbation de l'affichage de l'image d'affichage en cas de reconnaissance de l'objet étranger (7) sur la surface d'affichage (3).

2. Procédé selon la revendication 1, dans lequel ladite au moins une partie des diodes DEL du dispositif d'affichage à micro-DEL est alternativement active et actionnée en mode capteur, ladite au moins une partie des diodes DEL étant en particulier actionnée en mode capteur pendant une durée qui n'est pas perceptible par un utilisateur.

3. Procédé selon la revendication 1 ou 2, dans lequel une partie des DEL du dispositif d'affichage à micro-DEL est actionnée activement au moins temporairement pour émettre de la lumière et des DEL voisines sont actionnées simultanément en mode capteur pour détecter une incidence de lumière, les DEL actionnées en mode capteur étant agencées à plat sur la surface d'affichage (3) des dispositifs d'affichage à micro-DEL entre les DEL actionnées activement, de telle sorte que la lumière fournie par les DEL actionnées activement de la matrice de micro-DEL soit réfléchie sur un objet étranger (7) présent et puisse être détectée par les DEL actionnées en mode capteur.

4. Procédé selon la revendication 3, dans lequel les DEL actives sont commandées par impulsions avec un modèle d'impulsion déterminé, la lumière détectée par les DEL actionnées en mode capteur étant évaluée en reconnaissant qu'un objet étranger (7) est présent lors de la reconnaissance de la lumière pulsée avec le modèle d'impulsion déterminé.

5. Procédé selon la revendication 3, dans lequel un objet étranger (7) présent est reconnu en fonction d'une comparaison avec une valeur de seuil, une valeur de seuil étant déterminée en fonction de la luminosité ambiante.

6. Système d'affichage par réflexion (1) destiné à afficher une image d'affichage pour un occupant d'un véhicule automobile par réflexion de l'image d'affichage sur une surface de réflexion, en particulier sur un pare-brise (5), comprenant :
- une unité d'affichage (2) conçue avec un dispositif d'affichage à micro-DEL afin de délivrer l'image d'affichage par l'intermédiaire d'une surface d'affichage (3) de l'unité d'affichage (2), l'unité d'affichage (2) étant agencée sur un côté supérieur d'un panneau d'instruments (4) de telle sorte qu'une réflexion de l'image d'affichage par l'intermédiaire du pare-brise (5) soit perceptible dans une zone de l'œil (B) d'un occupant du véhicule ;
- une unité de commande (10), qui est conçue pour
∘ faire fonctionner au moins une partie des diodes DEL du dispositif d'affichage à micro-DEL en mode capteur pour détecter une intensité lumineuse de lumière incidente, en particulier de lumière ambiante incidente ;
∘ reconnaître qu'un objet étranger (7) est présent sur la surface d'affichage (3) en fonction des intensités lumineuses mesurées dans les diodes DEL actionnées en mode capteur ; et
∘ signaler une perturbation de l'affichage de l'image d'affichage en cas de reconnaissance de l'objet étranger (7) sur la surface d'affichage (3).

7. Système d'affichage par réflexion (1) selon la revendication 6, dans lequel l'unité d'affichage (2) est agencée dans la cavité de telle sorte que l'image d'affichage représentée sur la surface d'affichage (3) de l'unité d'affichage (2) ne soit pas directement perceptible dans la zone de l'œil (B).

8. Système d'affichage par réflexion (1) selon la revendication 6 ou 7, dans lequel le dispositif d'affichage à micro-DEL comporte une matrice de DEL.

9. Système d'affichage par réflexion (1) selon l'une quelconque des revendications 6 à 8, dans lequel une source lumineuse externe (11) est prévue pour augmenter l'intensité lumineuse de la lumière ambiante.

10. Système d'affichage par réflexion (1) selon la revendication 9, dans lequel la source lumineuse externe (11) est conçue pour émettre une lumière infrarouge, au moins les DEL du dispositif d'affichage à micro-DEL actionnées en mode capteur étant conçues pour détecter une lumière infrarouge incidente.

11. Véhicule automobile, comprenant :
- un panneau d'instruments (4) entre un pare-brise (5) du véhicule automobile et une colonne de direction ;
- le système d'affichage par réflexion (1) selon l'une quelconque des revendications 6 à 10.
